# EUROPEAN PATENT APPLICATION

(11) **EP 0 752 768 A2**
(43) Date of publication of application: **08.01.1997**
(21) Application number: 96850118.9
(22) Date of filing: 25.06.1996
(51) Int. Cl.: H04J 3/08, H04L 12/00

(54) **Telecommunication system and network element at telecommunication system**

(30) Priority: 06.07.1995 SE 9502467
(71) Applicant: TELIA AB, 123 86 Farsta (SE)
(72) Inventor: Hagström, Bengt, 125 33 Älvsjö (SE)
(74) Representative: Karlsson, Berne

(57) **Abstract**

The present invention relates to a telecommunication system where channel creating devices constitute the link between the subscriber equipments and the network. Channel creating devices are arranged to receive/transmit analog or digital information to/from the subscribers. Control devices in the telecommunication system allocate the subscribers channel capacity which corresponds to the for the communication necessary room for information. Further, the control device informs the channel creating devices which time slots and sizes of the time slots that shall be utilized. The control device also informs channel creating devices in question in the network which route a communication shall have. The invention allows that one and the same subscriber at the same time communicates with a number of subscribers.

## Description

### TECHNICAL FIELD

The present invention relates to a telecommunication system where information is transmitted between subscribers in the telecommunication system. The transmitted information can relate to speech, video, data etc. The subscriber equipments which are utilized in the telecommunication system consequently can be of different kinds, or involve a number of different functions.

### PRIOR ART

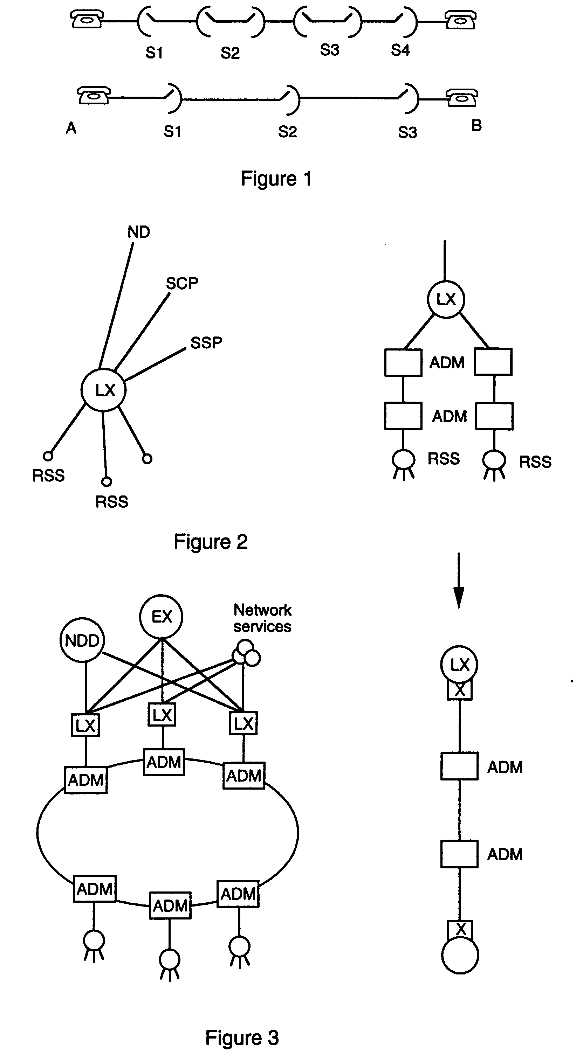

In Figure 1 is shown a conventional telecommunication system with a connection established between a subscriber A and a subscriber B. The connection of the subscribers has in this case been made over the stations S1, S2, S3. This picture can be regarded to show the early telephone station systems where connection occurred directly via different switches in the telecommunication system. The picture also can be regarded as showing a connection procedure in a completely manual system.

Concurrently with the development of the telecommunication systems, services of different kinds have been introduced. In Figure 2, a system where different kinds of services have been introduced is shown. In this system there are network data bases arranged which supply and identify different services. The fundamental construction of the original telecommunication systems is in this case in all essentials retained.

In Figure 3 is shown a further development of the telecommunication system where a ring network is arranged between units labelled ADM, where ADM has been introduced to relieve other logical functions in the system.

In common for all now known systems is that a connection between two subscribers, or between a subscriber and a service in the network, is made over one or more stations in the system. The different stations in the network are of different kinds, and different control systems exist, and the different resources are charged at each connection. Examples of equipments at the stations and in the network which are utilized are MUX and DEMUX etc.

### DESCRIPTION OF THE INVENTION

### TECHNICAL PROBLEM

In present telecommunication systems functions of different kinds are utilized at different points in the network. Thus, switching functions for connection of subscribers, for instance switches and line finders on the stations, the multiplexing equipment, channel allocation functions etc are used. Further, the transmitted information is transformed from analog to digital information in certain parts. The information is further transformed to different transmission rates in different parts of the network, depending on the capacity of the network and its physical construction.

There is a wish to minimize the costs i connection with establishing of telecommunication systems. To achieve this it is desirable that the information transmission as far as possible is transmitted in one and the same form, independent of where in the network this is done. To the extent this is possible, the information from the subscribers consequently should be in digital form or be transformed to digital form as close to the subscriber as possible. Further, the great variety of different types of equipments which exist today should be minimized.

### THE SOLUTION

The present invention relates to a telecommunication system which includes network, channel creating devices and control devices. Information in the telecommunication network is transmitted in channels. Channel creating devices are arranged between the subscribers and the network. The channel creating devices transmit digital or analog information to the telecommunication network after conversion of the information to for the network suitable information. The information is added to or extracted from the telecommunication network in time slots. The time slots are allowed to be of different sizes, depending on the current need of information. Allocation of suitable time slots is made by control devices in the system. The control system also indicates which time slots and the size of times slots that have been allocated the different channel allocation devices and the subscribers.

The networks in the telecommunication system is preferably arranged ring-shaped, and depending on the necessary capacity arranged parallelly and/or within each other. Information transmission between the networks is made via channel creating devices. The control devices are preferably arranged to control each ring network individually. A control device can also be in common for a number of ring networks.

Channel creating devices which are arranged to transmit information to/from the telecommunication network from/to subscribers are arranged to transform the information to/from the telecommunication network from/to the subscriber equipments.

The information in the network is transmitted digitally. Further, one and the same subscriber is allowed to communicate with one or more other subscribers at the same time. It consequently is allowed, in one and the same subscription, to establish a number of simultaneous communication connections. The subscriber at this decides which information that shall be transmitted to any of the other subscribers, and also decides to what extent information received from other subscribers shall be transmitted to other subscribers in the communication/communications.

The control devices are further arranged to communicate with each other and agree regarding channel allocations in the network/networks. The control devices at this identify the need of channels for each subsciber, and allocate the subscribers channel sizes corresponding to the the current need of information. The control devices are further arranged to identify individual subscribers and their information transmission need, and with which of the other subscribers, one or more, in the telecommunication system that information exchange shall be made. The control devices further decide which channel creating divices that shall be utilized in the individual communications. The control devices further receive control information from the subscribers.

The invention further relates to a network element at telecommunication system. The telecommunication system includes channel allocation devices and control devices. Information to/from subscribers are transmitted to the channel allocation devices. The control devices allocate necessary room for information and place. The channel allocation devices add/extract said information, and the information transmission in the telecommunication system is made in logical channels.

### ADVANTAGES

The present invention has the advantage that the information is early transformed to a digital form which can be utilized in all parts of the network. In this way the need for telecommunication stations, transmission equipment etc is excluded. Switching and routing in this case is only made in one type of channel allocation devices which are in common for the whole system. The transmission consequently is made in logical channels in and between the networks in the telecommunication system. From maintenance point of view, this is an advantage, since the maintenance staff only need to learn one or a few types of equipments. Further there are obvious economical advantages in the fact that the channel allocation devices can be arranged close to the subscribers.

The ring network structure further allows that the vulnerability in the network can be most significantly reduced. The control devices can in case of a break in any part of the network reroute the traffic other paths, or possibly only close that part or parts which are out of function. In the traditional network which is used at present, generally a lot of subscribers are affected.

### DESCRIPTION OF FIGURES

Figure 1 shows the fundamental construction of a conventional telecommunication network.

Figure 2 shows a further development of the conventional telecommunication system where different network databases have been involved in the network for provision of different services.

Figure 3 shows a further development of the system according to Figure 2. In the figure to the right x represents "Resource allocation, channel allocation device, switch", and ADM "Resource allocation device MUX/DEMUX".

Figure 4 shows the fundamental construction according to the invention.

Figure 5 shows ring network with channel allocation devices.

Figure 6 shows the central control device and the network element.

### DETAILED EMBODIMENT

In the following the invention is described with reference to the figures.

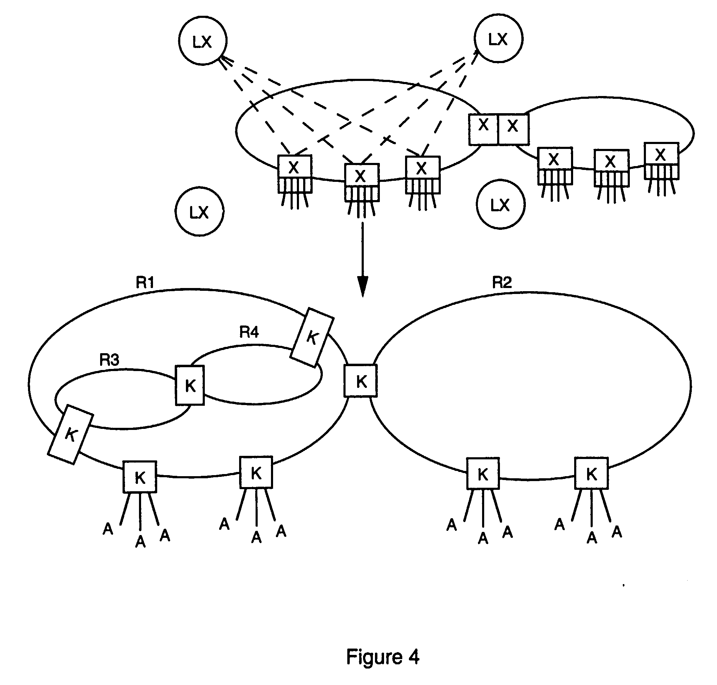

In Figure 4 a number of ring networks R1, R2, R3 and R4 are arranged. The ring networks R1 and R2 are arranged parallelly to each other, as are the ring networks R3 and R4 in relation to each other. The ring networks R3 and R4 are further arranged within the ring network R1. In the ring networks a number of channel creating devices, K, are further arranged. The channel creating devices are utilized for information transmission between the networks, respective between the networks and the subscribers, A. Further, there have been indicated two control devices, LX. The number of control devices can be fewer or more, depending on the capacity and functionality of the telcommunication system.

One of the subscribers in the ring network R1 intends to establish a communication. The subscriber activates his/her subscriber equipment and the channel creating device registers this. Information is transmitted between the channel creating device and the control device regarding the identity of the subscriber. The control device registers this at the same time as the subscriber identifies his/her wishes regarding communication with another subscriber, for instance one or more of the subscribers in ring network R2. In connection with request for connection with the wanted subscriber/subscribers in the other ring network, the subscriber also indicates which service or services, respective subscriber equipments that shall be utilized. The control system registers this, and notes which information need that exists. We can for instance suppose that subscribers want to get an ordinary telephone connection with one of the subscribers, and a video transmission with the other subscriber. The necessary amount of information for the video transmission is essentially larger than for a conventional speech connection. The control device registers this and allocates two channels to the subscriber, where the channels are adapted to the need of information. The channel for the video transmission is consequently considerably larger than the one for speech transmission. The control device further decides which channels that shall be utilized for what, and informs the channel creating device about this. The control device further decides which route in the network the connection shall be established. At this the control device informs said channel allocation devices in the ring network R1, R2 and R3. Further the control device informs the control device for ring network 2 about the connection in question. The control device for ring network 2 at this receives information about which subscribers that are affected, and which type of information that shall be transmitted to respective subscriber. The control device for the other network further receives information about which channels the control device in the first network has reserved for the information transmission in its network/networks. The control device in the other network registers this and appoints which channels that shall be utilized in ring network 2. Information is transmitted to the channel creating devices about which channels that have been reserved, and the size of these. The channel creating devices further receive information about which subscriber/subscribers that are affected by the communication. The channel creating devices register this and transmits call signal to the subscribers in question. When the subscribers have answered, the control device is informed, which also informs the control device in the first network, whereafter the communication transmission can start.

If it is supposed that the intended video transmission is digital already from the subscriber, the information is received by the channel creation device and is introduced into the appointed time slot. The information is after that transmitted in the logical channel and is received by the appointed channel allocation devices which transmit the information in the system between the different ring networks up to the subscriber in question. If we further suppose that the speech transmission is made via a normal, analog telephone set, the channel allocation equipment in this case receives the information in analog form and transforms this to digital information before it is introduced into the time slot in question at the information transmission in the ring network. After that also in this case a transmission of the information between networks in question via channel allocation devices in question is made. In the channel allocation device in ring network 2, to which the subscriber which the analog connection is connected, a transformation is made from digital to analog information. Information can after that be transmitted from the subscriber in the first ring network, R1, to respective subscribers in the second ring network, R2. Respective subscribers can, while the communication is going on, add or remove other communications which are needed or can be spared.

With the suggested solution a possibility is given to information transmission in the telecommunication system network in digital form from subscriber to subscriber.

Registration of the durations of the communications is performed in the control devices. The control devices also register which type of communication that has been applied, and transmit this information to charging equipments. The charging equipments after that see to it, for instance periodically, that costs for the established connections are charged respective subscribers. The control devices are further arranged to check whether a certain type of communication is allowed for involved subscribers in the system. This includes for instance a check that respective communicating subscribers have access to equipments for the connection in question, and whether certain type of equipments are not allowed. Examples of not allowed communications can for instance be calls to certain services which the subscriber have declined, or restrictions regarding international calls etc.

The invention further relates to a network element in a telecommunication network, i.e. that the invention includes arrangements which can be combined with other arrangements to obtain telecommunication networks. A network element has the form of a ring which is connected by a number of transmission parts which are connected by nodes. A central control unit controls all operations in all nodes in the ring, and receives especially traffic routing data and checks the traffic level in the ring. Network elements can be connected to external transmission routes and other network elements via the nodes.

The invention can be utilized at the construction of telecommunication networks and the control functions where the network is controlled by control devices which are centrally placed or placed in different points in the network.

The invention also can act as a centre in a telecommunication network and supply traffic allocation functions for this network.

The invention consequently supplies redundancy in the network element, since breaks in a connection can be attended to by the transmission being arranged another route in the system than the original. The redundancy is less than what should be obtained at a doubling of transmission routes, and is related to the number of nodes which are supplied in the ring.

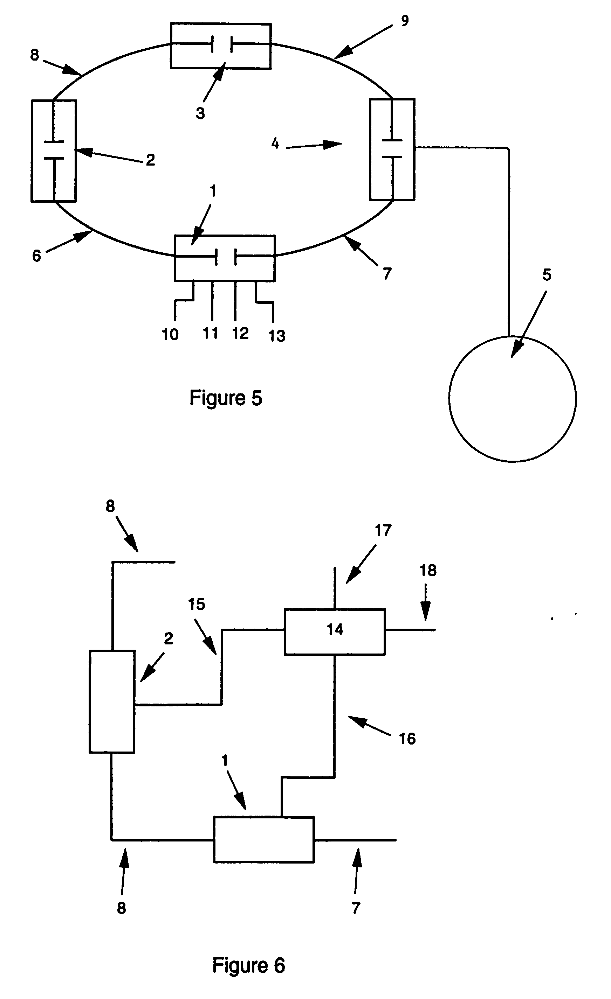

In Figure 5 the network element according to the present invention is shown, and Figure 6 shows the way in which the central control device is introduced in the network element.

The ring network is a series of transmission parts 6, 7, 8 and 9, connected with nodes, connection devices 2, 3, 4 and 5. Each node is equipped with a bus to which a series in-/out-devices are connected, shown i Figure 5 for node 1 as 10, 11, 12 and 13. These devices control the traffic in and out from the network element. These devices can supply links for varying transmission media such as optical fibre, coaxial cable or radio. Transmission media can supply communication links with other network elements such as are shown as 5, information transmitters or information receivers.
Each node has the following functions:
- it drains the information from the ring for further distribution outside the ring;
- it brings internally received information in to the ring;
- it controls the transmission direction in the ring;
- it executes the channel allocation in the ring;
- it controls accessibilities for different transmission parts in the ring and informs the control device, which decides about measures;
- it is influenced by signals from the control device 14 in Figure 6.

The information is preferably transmitted time multiplexed and in digital form.

Information about the traffic level in each of the nodes, and the accessibility of the transmission parts is transmitted to the control device 14, see Figure 6, via the connections 15 and 16. The nodes are controlled via signals from the control device 14 to the nodes over the connections 15 and 16. The control device establishes which channels that should be utilized for the transmission of data round the ring and also the direction of the transmission. The control device is progammed to control the connection elements in the node making the traffic pattern in the ring optimized and the traffic flow into and out from the ring controlled.

If for instance a break occurs in one of the transmission parts, for instance 7, the control device 14 initiates a signal to node 1 and 4 to close the part 7 and reroute the traffic via the paths 6, 8 and 9.

In Figure 6 the control device 14 is shown together with the connections 15 and 16 which connects it to node 1 and 2. Similar connections are supplied by the control device 14 to the nodes 3 and 4. The control device decides channel by time slot allocation in the ring and controls connection function preferably via the nodes 1, 2, 3 and 4.

The invention is not restricted to what is described above, or to the below presented patent claims, but may be subject to modifications within the frame of the idea of the invention.

## Claims

1. Telecommunication system, including network, channel creating devices and control devices, **characterized** in that information transmission is arranged to be transmitted in channels in the network, that the channel creating devices are arranged to supply the network with information in allocated time slots and extract information from the network from appointed time slots, that the control device is arranged to dynamically allocate time slots to the channel creating devices depending on the current need of information.

2. Telecommunication system according to the previous patent claim, **characterized** in that the network is preferably arranged ring-shaped.

3. Telecommunication system according to any of the previous patent claims, **characterized** in that ring-shaped networks are allowed and that these are arranged parallelly with each other.

4. Telecommunication system according to any of the previous patent claims, **characterized** in that the ring-shaped networks are allowed to be arranged within each other.

5. Telecommunication system according to any of the previous patent claims, **characterized** in that the different ring-shaped networks transmit information between each other via the channel creating devices.

6. Telecommunication system according to any of the previous patent claims, **characterized** in that the ring networks are arranged to be controlled by the control devices which are individual for each ring network or group of ring networks.

7. Telecommunication system according to any of the previous patent claims, **characterized** in that the channel creating devices are arranged to transmit information to/from the telecommunication network from/to subscriber equipments.

8. Telecommunication system according to patent claim 7, **characterized** in that the channel creating devices are arranged to transform the information from the telecommunication network to for the subscriber equipments receivable information.

9. Telecommunication system according to patent claim 7 or 8, **characterized** in that the channel creating devices are arranged to transform the information from the subscriber equipments to for the telecommunication network transmittable information.

10. Telecommunication system according to patent claim 1, **characterized** in that the information in the network is transmitted digitally.

11. Telecommunication system according to patent claim 10, **characterized** in that the information to/from the subscriber equipments is transmitted digitally and/or in analog form.

12. Telecommunication system according to patent claim 10 or 11, **characterized** in that the subscriber equipments are arranged to communicate, at one and the same point of time, with one or more of the other subscriber equipments in the telecommunication network.

13. Telecommunication system according to any of the patent claims 11 or 12, **characterized** in that the subscriber equipments are arranged to selectively decide which information that shall be communicated to other subscriber equipments.

14. Telecommunication system according to patent claim 11 up to and including 13, **characterized** in that the subscriber equipments are arranged to establish which information that has been received from one of the other subscriber equipments which shall be transmitted to one or more of the other subscriber equipments.

15. Telecommunication system according to any of the previous patent claims, **characterized** in that the channel allocation devices are arranged on a network section.

16. Network element for creation of the telecommunication system according to patent claim 1, and the network element includes a number of nodes and a number of transmission routes configured in a ring structure, **characterized** in that channel creating devices in the ring structure handles traffic in the ring structure and between different ring structures and out of the ring structure, that control devices are arranged to control the traffic in just any direction from the channel creating devices in to the ring structure, that the channel creating devices are arranged to receive information regarding traffic load in the ring structure, and that the control devices are arranged to transmit the control signal to the channel creating devices for control of the traffic in the ring structure.

17. Network element according to patent claim 16, **characterized** in that the channel creating devices are connected to a number of in-/out-ports arranged to receive the traffic from different external transmission media to the network activity.

18. Network element according to patent claim 16 or 17, **characterized** in that information is transmitted in for instance fibre, coaxial cable, radio, or pair connections.

19. Network element according to any of the patent claims 16 up to and including 18, **characterized** in that the control devices are arranged to control the traffic in the channel creating devices, at which a part or parts of the ring structure is possible to close for communication.

20. Network element according to any of the patent claims 16 up to and including 19, **characterized** in that the control device is arranged to order the channel creating devices to stop and/or turn the traffic.

21. Network element according to any of the patent claims 16 up to and including 20, **characterized** in that the control device is arranged to establish an optimal traffic handling in the network element and transmit the control signal to the channel creating devices for implementation of the optimal traffic handling.

22. Network element according to any of the patent'claims 16 up to and including 21, **characterized** in that the traffic is transmitted in time division multiplexing format in the ring structure, and the control devices are arranged to allocate the channel creating devices channels for the traffic.

23. Network element according to any of the patent claims 16 up to and including 22, **characterized** in that the telecommunication system is arranged to include a number of network elements connected by the channel creating devices.

24. Network element according to any of the patent claims 16 up to and including 23, **characterized** in that the channel creating devices are arranged to communicate with one or more transmission media outside the network element.

25. Network element according to patent claim 16, **characterized** in that the channel creating devices constitute a functionality in the nodes.
